Europäisches Patentamt

European Patent Office

Office européen des brevets

(19)

(11) Veröffentlichungsnummer: **0 093 878**
**B2**

(12)

# NEUE EUROPÄISCHE PATENTSCHRIFT

(45) Veröffentlichungstag der neuen Patentschrift:
**08.08.90**

(21) Anmeldenummer: **83103461.6**

(22) Anmeldetag: **09.04.83**

(51) Int. Cl.⁵: **B 01 J 3/03, F 16 J 13/06**

(54) **Verschlusssystem für Druckbehälter.**

(30) Priorität: **12.05.82 DE 3217819**

(43) Veröffentlichungstag der Anmeldung:
**16.11.83 Patentblatt 83/46**

(45) Bekanntmachung des Hinweises auf die
Patenterteilung:
**07.01.87 Patenblatt 87/02**

(45) Bekanntmachung des Hinweises auf die
Entscheidung über den Einspruch:
**08.08.90 Patentblatt 90/32**

(84) Benannte Vertragsstaaten:
**AT BE CH DE FR GB IT LI LU NL SE**

(56) Entgegenhaltungen:
**WO-A-80/01831**
**DE-A-2 953 541**
**DE-B-1 057 402**
**US-A-2 338 622**
**US-A-3 062 401**

(73) Patentinhaber: **Uhde GmbH**
**Friedrich-Uhde-Strasse 15 Postfach 262**
**D-4600 Dortmund 1 (DE)**

(72) Erfinder: **Minning, Rudolf**
**Althoffstrasse 36**
**D-4600 Dortmund 1 (DE)**
Erfinder: **Körner, Jörg-Peter, Dipl.-Ing.**
**Baurothstrasse 7**
**D-5800 Hagen (DE)**
Erfinder: **Dierkes, Heribert, Ing.grad.**
**Im Lindental 19**
**D-5800 Hagen 7 (DE)**
Erfinder: **Saamer, Peter, Dipl.-Ing.**
**Letteweg 36**
**D-5860 Iserlohn-Hennen (DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1 (DE)**

EP 0 093 878 B2

**Beschreibung**

Die Erfindung betrifft ein Verschlusssystem für Druckbehälter mit einem Verschluss auf mindestens einer Behälterseite, wobei der Verschluss aus dem Deckel und zwei Klammerhälften besteht, die jede für sich mittels Führungselementen in Schliess- oder Offenstellung fahrbar sind, die Klammerhälften, der Deckel und der Druckbehälter Anlageflächen aufweisen und wobei die Anlageflächen der Klammerhälften in Schliessstellung den Anlagenflächen an Deckel und Druckbehälter gegenüberliegen. Insbesondere ist das Verschlusssystem geeignet für Verschlusssysteme für vollautomatischen betrieb. unter Druckbehältern werden sloche für Betriebsdrücke von 10 bar und mehr, d.h. bis über 1000 bar verstanden.

Werden Druckbehälter im Chargenbetrieb gefüllt und entleert, ist es erforderlich, den Schliess- und Öffnungsvorgang zu mechanisieren, d.h. die schweren Deckel und anderen Verschlussteile müssen mittels Vorrichtungen in ihre jeweiligen Stellungen gebracht werden können.

Es ist bekannt, den Deckel eines Druckbehälters mittels Bajonettverschluss zu arretieren. Hierfür ist sowohl eine Linear-Bewegung in Richtung Behälterlängsachse als auch eine Dreh-Bewegung erforderlich. Der innere Verschlussteil im Bajonettverschluss ist ungeeignet für Chargenbetrieb mittels Füllmedium, wie körniges oder faseriges Gut, da eine Verschmutzung in Ekken und Hinterdrehungen sich nicht vermeiden lässt.

Es ist weiter ein Verschluss bekannt, bei dem der flache Deckel gehalten wird durch eine mehrteilige Klammer. Die mehrteilige Klammer weist innen beidseitig Anlageflächen auf, an denen Deckel und Gehäuse im geschlossenen Zustand anliegen.

Die bekannten Vorrichtungen bzw. Verschlusssysteme erlauben bisher nicht die Mechanisierung, da die hohen im Betrieb auftretenden Kräfte zur Verbiegung von Vorrichtungsteilen führen und der Abrieb an Anlageflächen zu stark ist.

Der Erfindung liegt die Aufgabe zugrunde, die bestehenden Nachteile bisheriger Verschlusssysteme zu beseitigen.

Die Aufgabe wird erfindungsgemäss gelöst durch die Massnahmen des Kennzeichens der Ansprüche.

Die mit der Erfindung erzielten Vorteile bestehen insbesondere darin, dass sich der Chargenbetrieb für einen solchen Druckbehälter mechanisieren lässt. Die Schliess- und Öffnungszeiten werden stark gemindert. Begrundet wird dies durch die konstruktiv glatte Ausführung des Behälters und des bzw. der Deckel. Die Deckel werden axial eingesetzt ohne jede Drehung. Sie gelangen bis zur Auflage auf den Behälterrand. Die beiden Klammerhälften lassen sich berührungslos bis in die Schliessstellung fahren bzw. stellen sich berührungsfrei ein, nachdem der Betriebsdruck im Behälter voll abgebaut wurde. Die Klammerhälften lassen sich danach reibungsfrei von dem Deckel und dem Behältergegenrand wegfahren. Es kommt nicht zum Verschleiss an den Anlageflächen.

Weiterhin ist erfindungswesentlich, dass bei Schliessstellung des Deckels und innerer Belastung des Druckbehälters und daraus resultierender Positionsänderung des Deckels um Millimeter bzw. Bruchteile davon keine unzulässige Kraft, so z.B. als Biegekraft, über Deckel und/oder Klammer auf ihre Führungselemente übertragen wird. Nach Entlastung des Druckbehälters wird der Druck auf die Anlageflächen zu Null und sie entfernen sich geringfügig voneinander, d.h. es stellt sich Spiel ein.

Ein Ausführungsbeispiel der Erfindung ist in der Zeichnung dargestellt und wird wie folgt beschrieben:

Fig. 1 Schnitt eines Druckbehälters mit Deckel und Klammer

Fig. 2 schematisch: Stehender Druckbehälter mit Klammer-Verfahrvorrichtung in Betriebsstellung und in Offenstellung.

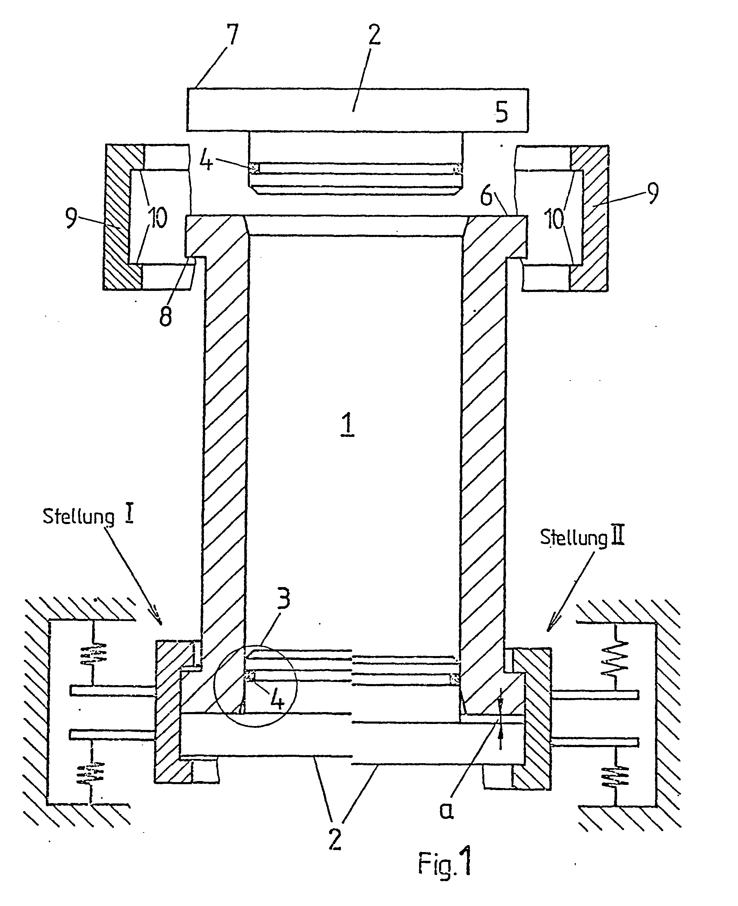

Der Druckbehälter 1 nach Fig. 1 ist für einen Betriebsdruck von 350 bar ausgelegt und wird beidseitig mit je einem Deckel 2 verschlossen. Deckel 2 und Behälter 1 sind im Schliessbereich 3 so ausgebildet, dass ein mechanisches Ein- und Ausfahren der Deckel möglich ist, ohne dass die Dichtung 4, beispielsweise ein O-ring, beschädigt wird. Der Behälter 1 und die Deckel 2 weisen am äusseren Rand 5 und 6 Flächen 7 und 8 als Anlageflächen auf, die rechtwinklig zur Behälterlängsachse stehen. Die Klammerhälften 9, die Zeichnung zeigt jeweils 1/4 der rechten bzw. linken Kammer, stehen mit ihren Anlageflächen 10 den Anlageflächen 7 und 8 an Deckel und Behälterwand berührungslos gegenüber in der Nullstellung, siehe I. Wird der Druckbehälter unter Druck gesetzt, bewegen sich die Deckel 2 nach auswärts und bringen die einzelnen Anlageflächen in Kontakt miteinander, Betriebsstellung, siehe II. Dabei hat sich jede Klammerhälfte max. um den Betrag der Kontakttoleranz (a) in Richtung der Behälterlängsachse nach aussen bewegt.

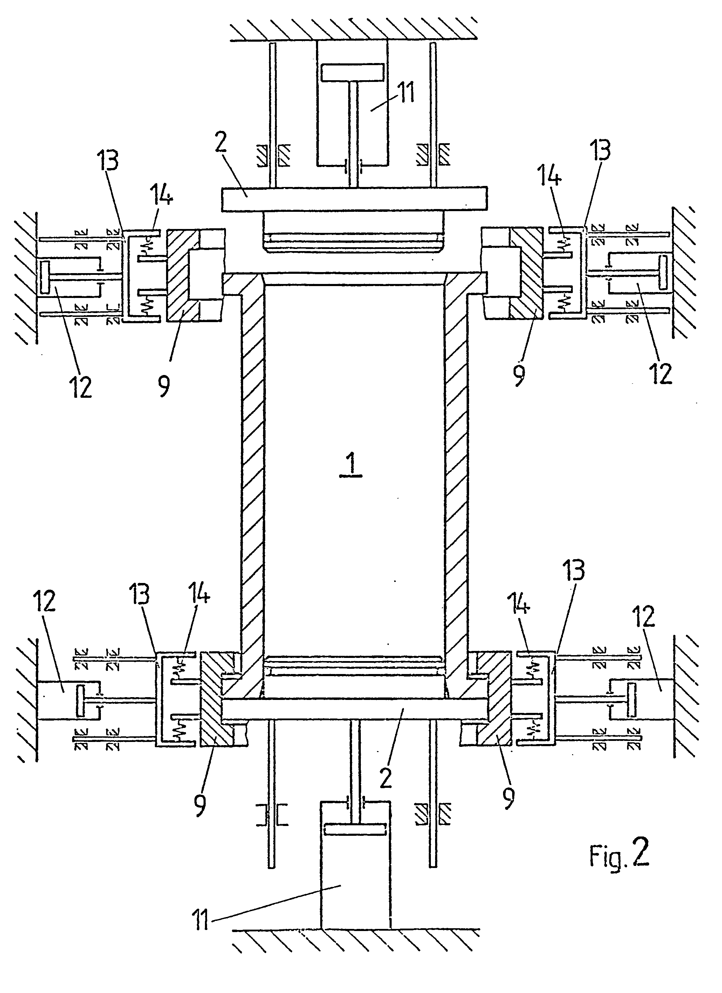

Um den Schliess- und Öffnungsvorgang für einen erfindungsgemässen Druckbehälter voll mechanisieren zu können, werden Deckel und Klammer verfahrbar ausgestaltet, siehe Fig. 2. Dem fest angeordneten Druckbehälter 1 sind die Deckel 2 und die Klammerhälften 9 verfahrbar zugeordnet. Während die Deckel 2 auf den Deckelverfahrvorrichtungen 11 axial und senkrecht verfahren werden, werden die Klammerhälften auf den Klammerverfahrvorrichtungen 12 waagerecht und in rechtem Winkel zur Behälterachse verfahren. Sie werden so weit nach aussen verfahren, bis die Deickel frei nach oben oder unten abgefahren werden können. Die Klammerhalften 9 sind auf den Führungselementen 13 mittels elastischer Elemente 14, wie z.B. Federpackungen, spannbar elastisch gelagert, sodass sie im Schliesszustand und unter Einwirkung des Betriebsdruckes um den Betrag der Kontakttoleranz (a) sich axial bewegen können, ohne eine unzulässige Kraft auf die Führungselemente auszüben. Die elastischen Elemente können auch

pneumatisch oder hydraulischer Art sein. Sie müssen so ausgestaltet sein, dass sie nach Druckentlastung eine Rückstellung der Klammerhälften in die Nullstellung, siehe I, bewirken. Im Falle der Federpackungen muss ihre Spannung ausreichen, die Klammerhälften in die Nullstellung zu fahren.

Unter Nullstellung nach Sektion I in Fig. 1 wird die Position von Gehäuse 1 und Deckel 2 in Kontakt zueinander und von Klammer 9 in Kontaktfreiheit zu Gehäuse 1 und Deckel 2 verstanden.

Wird der Druckbehälter 1 liegend angeordnet, können die Klammerhälften auf waagerechten Führungsbahnen gleiten bzw. rollen.

Besteht der Druckbehälter lediglich aus zwei Kugelhälften, entfallen zwangsläufig die entsprechenden Deckel. Jede Kugelhälfte ist gleichzeitig Gefässteil und Deckel. Es genügt demzufolge, wenn eine Kugelhälfte verfahrbar ist. Die beiden Klammerhälften werden in gleicher Weise verfahren wie oben beschrieben.

## Patentansprüche

1. Verschlußsystem für Druckbehälter (1) mit einem Verschluß auf mindestens einer Behälterseite, wobei der Verschluß aus dem Deckel (2) und zwei Klammerhälften (9) besteht, die jede für sich mittels Führungselementen (13) in Schießoder Offenstellung verfahrbar sind, die Klammerhälften, der Deckel und der Druckbehälter Anlageflächen (7, 8, 10) aufweisen und wobei die Anlagefläche der Klammerhälften in Schießstellung den Anlageflächen an Deckel und Druckbehälter gegenüberliegen, dadurch gekennzeichnet, daß sich die Anlageflächen (7, 8, 10) in Schließstellung bei drucklosem Behälter (1) mit Spiel gegenüberliegen und senkrecht zur Behälterachse angeordnet sind, daß die Klammerhälften (9) jeweils mittels spannbarer elastischer Elemente (14) für Bewegung in Achsial-Richtung des Deckels mit den Führungselementen (13) verbunden sind und daß die Spannung der elastischen Elemente einen Wert aufweist, der die Klammerhälften nach Druckentlastung des Druckbehälters in ihre Nullstellung bewegt.

2. Verschlußsystem für Druckbehälter (1) mit einem Verschluß auf mindestens einer Behälterseite, wobei der Verschluß aus dem Deckel (2) und zwei Klammerhälften (9) besteht, die jede für sich mittels Führungselementen (13) in Schließoder Offenstellung verfahrbar sind, die Klammerhälften, der Deckel und der Druckbehälter Anlageflächen (7, 8, 10) aufweisen und wobei die Anlagefläche der Klammerhälften in Schließstellung den Anlageflächen an Deckel und Druckbehälter gegenüberliegen, dadurch gekennzeichnet, daß sich die Anlageflächen (7, 8, 10) in Schließstellung bei drucklosem Behälter (1) mit Spiel gegenüberliegen und senkrecht zur Behälterachse angeordnet sind, daß die Klammerhälften (9) jeweils mittels hydraulisch betätigbarer Elemente (14) für Bewegung in Achsial-Richtung des Deckels mit den Führungselementen (13) verbunden sind und daß die hydraulisch betätigbaren Elemente nach Druckentlastung des Druckbehälters mit einem Druck beaufschlagbar sind, der die Klammerhälften in ihre Nullstellung bewegt.

3. Verschlusssystem für Druckbehälter nach Anspruch 1, dadurch gekennzeichnet, dass die elastischen Elemente (14) Federpakete sind zwischen fixierten und beweglichen Bauteilen.

## Revendications

1. Système de fermeture pour récipient sous pression (1) doté d'une dispositif de verrouillage sur un côté du récipient au moins, étant entendu que le dispositif de verrouillage est composé d'un couvercle (2) et d'un crampon à deux segments (9), chacun d'eux étant amené en position ouverte ou fermée au moyen d'éléments de guidage (13), que le crampon à segments, le couvercle et le récipient sous pression présentent des faces de butée (7, 8, 10) et étant entendu que, en position fermée, les faces de butée du crampon à segments sont en vis-à-vis des faces de butée du couvercle et du récipient sous pression, caractérisé en ce que, en position fermée et le récipient (1) étant hors pression, les faces de butée (7, 8, 10) se font vis-à-vis avec un jeu et sont disposées perpendiculairement à l'axe du récipient, que les crampons à deux segments (9) sont chacun reliés aux éléments de guidage (13) par l'intermediaire d'éléments élastiques (14) détendables pour assurer le déplacement dans le sens axial du couvercle et que la tension des éléments élastiques présente une valeur qui ramène les segments du crampon en position zéro après la décompression du récipient.

2. Système de fermeture pour récipient sous pression (1), doté d'un dispositif de verrouillage sur un côté du récipient au moins, étant entendu que le dispositif de verrouillage est composé d'un couvercle (2) et d'un crampon à deux segments (9), chacun d'eux pouvant se déplacer au moyen d'éléments de guidage (13) pour prendre la position ouverte ou la position fermée, que les segments de crampon, le couvercle et le récipient sous pression présentent des faces de butée (7, 8, 10), les faces de butée du crampon à segment étant, en position fermée, en vis-à-vis des faces de butée du couvercle et du récipient sous pression, cartactérisé en ce que, en position fermée et le récipient (1), étant hors pression, les faces de butée (7, 8, 10) se font vis-à-vis avec du jeu et sont disposées perpendiculairement à l'axe du récipient, que les crampons à deux segments (9) sont chacun reliées aux éléments de guidage (13) par l'intermédiaire d'éléments (14) à commande hydraulique pour assurer le déplacement dans le sens axial du couvercle, et que les élements à commande hydraulique, après la décompression du récipient, sont soumis à une pression que ramène les segments du crampon en position zéro.

3. Système de fermeture pour récipient sous pression d'après la revendication 1, caractérisé en ce que les éléments flexibles (14) sont des blocs- ressorts installés entre des pièces fixes et des pièces mobiles.

### Claims

1. Closure system for a pressure vessel (1) having a closure on at least one side of the vessel, the closure comprising the lid (2) and two halves (9) of a clamp each of which can be brought independently into the closed or the open position by means of guide elements (13), the clamp halves, the lid and the pressure vessel having bearing surfaces (7, 8, 10) and the bearing surface of the clamp halves, in the closed position, lying opposite in bearing surfaces on the lid and the pressure vessel, characterised in that in the closed position, in the case of an unpressurised vessel (1), the bearing surfaces (7, 8, 10) lie opposite one another, with play, and are arranged perpendicular to the vessel axis, the clamp halves (9) are connected to the guide elements (13) by way of tensionable resilient elements (14) for movement in the axial direction of the lid and the tensioning of the resilient elements has a value that moves the clamp halves into their neutral position once the pressure vessel has been relieved of pressure.

2. Closure system for a pressure vessel (1) having a closure on at least one side of the vessel, the closure comprising the lid (2) and two halves (9) of a clamp each of which can be brought independently into the closed or the open position by means of guide elements (13), the clamp halves, the lid and the pressure vessel having bearing surfaces (7, 8, 10) and the bearing surface of the clamp halves, in the closed position, lying opposite in bearing surfaces on the lid and the pressure vessel, characterised in that in the closed position, in the case of an unpressurised vessel (1), the bearing surfaces (7, 8, 10) lie opposite one another, with play, and are arranged perpendicular to the vessel axis, the clamp halves (9) are connected to the guide elements (13) by means of hydraulic elements (14) for movement in the axial direction of the lid and once the pressure vessel has been relieved of pressure the hydraulic elements can be subjected to a pressure that moves the clamp halves into their neutral position.

3. Closure system for a pressure vessel according to claim 1, characterised in that the resilient elements (14) are spring assemblies between fixed and moving components.

Stellung I

Stellung II

Fig. 1

Fig. 2